# EUROPEAN PATENT SPECIFICATION

(11) **EP 1 772 628 B1**
(45) Date of publication and mention of the grant of the patent: **29.07.2009**
(21) Application number: 06025449.7
(22) Date of filing: 10.11.2005
(51) Int. Cl.: F04B 49/06, F04B 39/14, F04B 39/12

(54) **Compressor control unit and compressor control method**
Steuereinheit eines Verdichters und Verfahren zur Steuerung eines Verdichters
Dispositif et méthode de commande pour compresseur

(30) Priority: 11.11.2004 JP 2004327442
(43) Date of publication of application: 11.04.2007
(62) Divisional of application: 05024574.5
(73) Proprietor: Panasonic Corporation, Kadoma-shi Osaka 571-8501 (JP)
(72) Inventor: Ogawa, Masanori, Shiga 525-0023 (JP); Yoshitsubaki, Norifumi, Otsu-shi Shiga 520-2144 (JP)
(74) Representative: Samson & Partner

(56) References cited:
- EP-A- 0 652 632
- EP-A- 0 774 580
- US-A- 4 706 470

## Description

The present invention relates to a compressor control unit for driving a compressor for compressing a coolant by an inverter control using an AC power source, and a compressor control method using the compressor control unit.

Recently, there has been strong tendency emphasizing on compactness and energy conservation in a household air conditioner or the like. To this purpose, an indoor unit of the air conditioner needs to have a heat exchanger with an enlarged heat transfer area, and the size of an outdoor unit should be reduced while a heat transfer area of a heat exchanger thereof is increased. Further, compactness and high efficiency of a compressor incorporated in the outdoor unit is also required. As for the compressor, a compressor main body and a compressor control unit need to be integrated as one body to thereby reduce the total volume of components of the compressor and at the same time facilitate the assembly thereof during fabrication.

Commonly used as a compressor in a household air conditioner is a type employing an inverter control mechanism. In this type of compressor, both a compressor and a compressor control unit for controlling the compressor are accommodated in an outdoor unit of the air conditioner to run a cooling cycle.

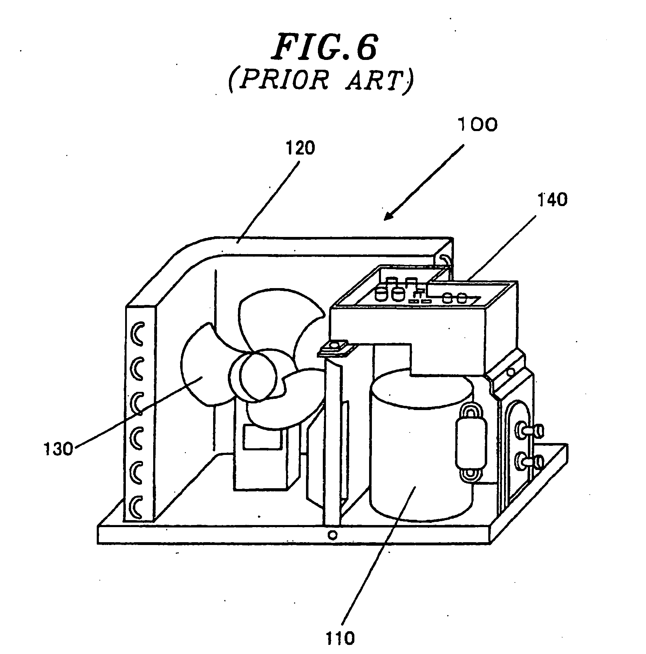

Fig. 6 provides a perspective view describing a schematic configuration of an outdoor unit of a conventional air conditioner. As shown in Fig. 6, outdoor unit main body 100 includes compressor 110 having a compressing mechanism (not shown) and a motor unit (not shown) for driving the compressing mechanism; outdoor heat exchanger 120 for performing a heat exchange operation with exterior air; and blower 130 for blowing exterior air for the heat exchange operation. The compressing mechanism and the motor unit are accommodated in a sealed vessel of compressor 110. Further, these components are accommodated in a casing (not shown). Also, driving circuit unit 140 for driving the components in outdoor unit main body 100 is provided in an upper space above outdoor unit main body 100 to be placed away from compressor 110.

Driving circuit unit 140 has a compressor control unit for controlling compressor 110, a blower control unit for controlling blower 130, a cooling cycle control unit for controlling a cooling cycle and a wiring portion connected to an indoor unit. Here, the compressor control unit is a major component of driving circuit unit 140.

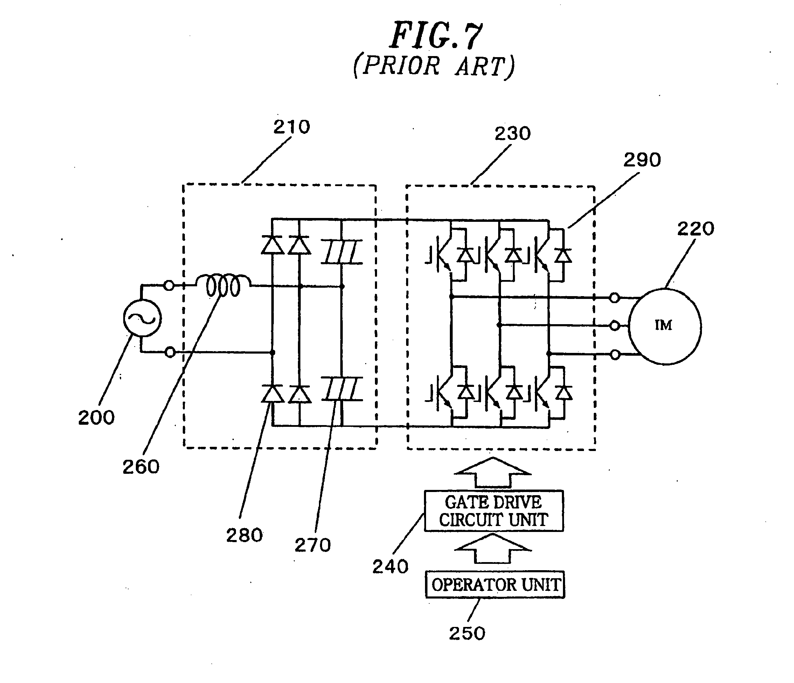

Fig. 7 sets forth a driving circuit diagram for driving compressor 110 by an inverter control. As shown in Fig. 7, a driving circuit includes rectifier circuit unit 210 serving as a converter circuit unit for converting an AC power from commercial AC power source 200 into a DC power; switching circuit unit 230 serving as an inverter circuit unit for converting the DC power into a three-phase AC power to drive motor 220 of compressor 110; gate drive circuit unit 240 for driving switching circuit unit 230; and operator unit 250 for generating an energization signal. Here, rectifier circuit unit 210 has reactor 260, capacitor 270, diode 280, and so forth. Further, switching circuit unit 230 has switching elements 290 formed of an insulated gate bipolar transistor (IGBT), a power transistor, and the like which are switchable at a high speed.

Referring back to Fig. 6, driving circuit unit 140 is provided as an independent unit from other driving elements, and it is configured to be connected with the other driving elements by wiring when they are assembled.

Meanwhile, recently, the compressor with an inverter control is also employed in an air conditioner for use in a car, and to make the air conditioner compact and light-weighted, the compressor and the compressor control circuit unit are integrated as one body (see, for example, Japanese Patent Laid-open Application Nos. 2002-174178 and 2003-13859).

In the conventional air conditioner equipped with the inverter driving compressor using a commercial AC power source, the compressor main body and the compressor control unit are provided separately. For the reason, the volume occupied by the compressor control unit in the outdoor unit increases, resulting in a reduction of the heat transfer area of the outdoor heat exchanger, which in turn deteriorates the efficiency of the air conditioner.

Meanwhile, if the compressor control unit and the compressor main body are integrated as a single body by reducing the size of the compressor control unit to decrease the volume occupied by the compressor main body and the compressor control unit in the outdoor unit, there give rise to following problems. In order to reduce the size of the compressor control unit and integrate it as one body with the compressor main body, the converter circuit unit, the inverter circuit unit and the control circuit unit for controlling them need to be accommodated in a smaller space. However, since the converter circuit and the inverter circuit are heating elements, a thermal damage may be inflicted on the control circuit unit with, for example, a microcomputer. Furthermore, since the temperature of the compressor main body remains to be high due to a compression coolant, the compressor control unit would be affected by the heat from the compressor main body as well.

US 4,706,470 discloses a system and apparatus for controlling the operation of a vibrating compressor using a predetermined frequency corresponding to the load thereof, comprising a first sensor for detecting a temperature of pressure corresponding to the saturated vapor pressure of a refrigerant sucked by a vibrating compressor, a second sensor for detecting a temperature or pressure corresponding to the saturated vapor pressure of the refrigerant compressed and discharged by the compressor, and a control section for generating a drive power of a predetermined frequency based on the temperatures and pressures detected by the first and second sensors, and wherein the compressor is driven by a drive power generated by the control section. The operation of the vibrating compressor can be controlled at the maximum efficiency by relating the frequency of an alternating current power fed to the vibrating compressor with the suction temperature or pressure and the discharge temperature of pressure of the refrigerant.

EP 0 774 580 A2 discloses a vibrating compressor, which comprises a piston driving section for driving a piston by supplying a piston driving force, a displacement detecting section connected in an axial direction of the piston, an upper dead point position detecting section for detecting an upper dead point position based on a piston position signal from the displacement detecting section, and a driving force control section for changing the driving force supplied to the piston by the piston driving section according to a difference between the upper dead point position and a preset upper dead point position reference value immediately after the upper dead point position detecting section detects the upper dead point position, prevents its compression efficiency from decreasing due to stabilization and prevents a device from being damaged. In the vibrating compressor, it is also possible to calculate a stroke based on a detected piston position or to control the driving force based on a detected frequency.

EP 0 652 632 A2 discloses a power supply for vibrating compressors having an inverter for converting direct current into alternating current comprising DC power source section for applying d-c voltage to the inverter, current detecting means for detecting a current flowing in the vibrating compressor, and a control section having a frequency following circuit for generating a frequency following the resonance frequency of the vibrating compressor on the basis of a current detected by the current detecting means, and an inverter control circuit for controlling the inverter with the frequency generated by the frequency following circuit, so that the vibrating compressor is driven by an AC voltage of the frequency agreeing with the resonance frequency of the vibrating compressor.

It is, therefore, an object of the present invention to provide a compact compressor control unit for performing an inverter control with a commercial AC power source, capable of improving reliability of components accommodated therein and, also, capable of increasing an effective heat transfer area of an outdoor unit of an air conditioner when it is installed in the outdoor heat exchanger, to thereby improve the capacity of the air conditioner; and a compressor control method using same.

In accordance with the present invention, there is provided a compressor control unit according to claim 1.

With this configuration, it is possible to detect respective temperatures of heating elements or heated elements disposed in the compressor control unit to thereby perform an optimal operation of the air conditioner and to improve the reliability of the circuit components.

Further, the present invention provides a compressor control method according to claim 6.

Preferred embodiments of the compressor control unit and the compressor control method according to the present invention are defined in the respective dependent claims.

The above and other objects and features of the present invention will become apparent from the following description of preferred embodiments given in conjunction with the accompanying drawings, in which:
Figs. 1A and 1B illustrate a plan view and a front view of an outdoor unit of an air conditioner using a compressor control unit in accordance with a preferred embodiment of the present invention, respectively;
Fig. 2 sets forth a schematic front view of a compressor unit using the compressor control unit in accordance with the preferred embodiment of the present invention;
Fig. 3 provides a plan view of the compressor control unit in accordance with the preferred embodiment of the present invention;
Fig. 4 depicts a cross sectional view taken along a line A-A of Fig. 3;
Fig. 5 presents a flow chart to describe the compressor control method in accordance with the preferred embodiment of the present invention;
Fig. 6 shows a perspective view to illustrate a schematic configuration of an outdoor unit of a conventional air conditioner; and
Fig. 7 is a driving circuit diagram for driving a compressor by inverter control.

Hereinafter, preferred embodiments of the present invention will be described in detail with reference to the accompanying drawings.

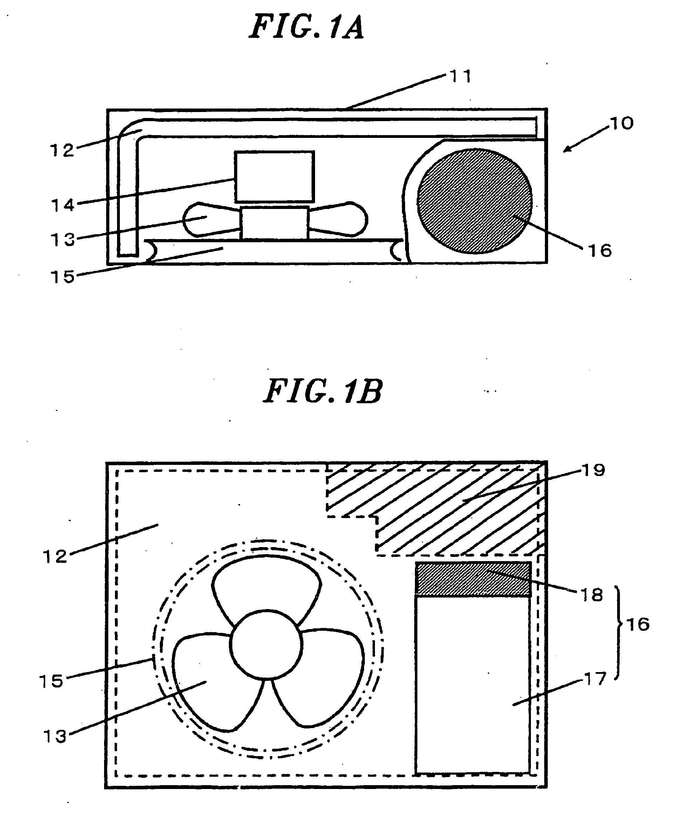

Figs. 1A and 1B illustrate a plan view and a front view of an outdoor unit of an air conditioner accommodating therein a compressor control unit in accordance with a preferred embodiment of the present invention, respectively. Outdoor unit main body 10 includes casing 11, outdoor heat exchanger 12, blower 13, blower motor 14, bellmouth 15 serving as an air flow guide, and compressor 16. Compressor 16 has compressor main body 17 and compressor control unit 18 disposed on an upper portion of compressor main body 17 as one body therewith.

The difference between outdoor unit main body 10 of the preferred embodiment and conventional outdoor unit main body 100 shown in Fig. 6 lies in the overall configuration of the compressor and, also, in the configuration of a driving circuit unit. That is, compressor control unit 18 occupying most of the volume of the driving circuit unit is reduced in its size, and thus obtained compact compressor control unit 18 is mounted on the upper portion of compressor main body 17 as one body therewith. Accordingly, shaded area 19 shown in Fig. 1B, which used to be left conventionally as an ineffective heat transfer area occupied by a conventional driving circuit unit, can be utilized as an effective heat transfer area. Consequently, the capacity of the air conditioner can be increased.

Moreover, since compressor main body 17 and compressor control unit 18 of compressor 16 are integrated as one body in the assembly of outdoor unit main body 10 becomes easier, and a maintenance work therefor can also be facilitated because compressor 16 and compressor control unit 18 can be treated as a single unit.

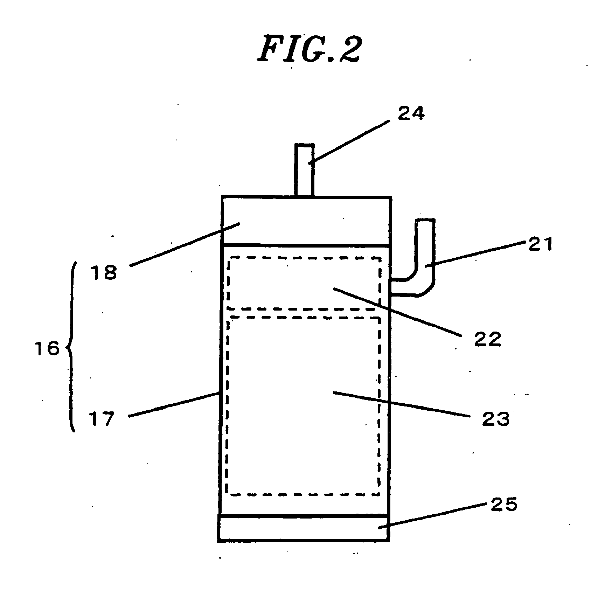

Fig. 2 sets forth a schematic front view of compressor 16. As shown in the figure, compressor main body 17 formed of a sealed housing includes compressing mechanism 22 for compressing a coolant drawn through coolant suction pipe 21; and motor unit 23 for driving compressing mechanism 22. The rotary power generated by motor unit 23 is transferred to compressing mechanism 22 via a rotating shaft (not shown), to make a compressing element (not shown) rotate or reciprocate. As a result of the rotation or the reciprocating movement of the compressing element, the coolant is compressed, and the compressed coolant, is supplied into a cooling cycle via coolant discharge pipe 24 provided at an upper portion of compressor 16. Further, compressor main body 17 is installed in outdoor unit main body 10 fixed via base 25.

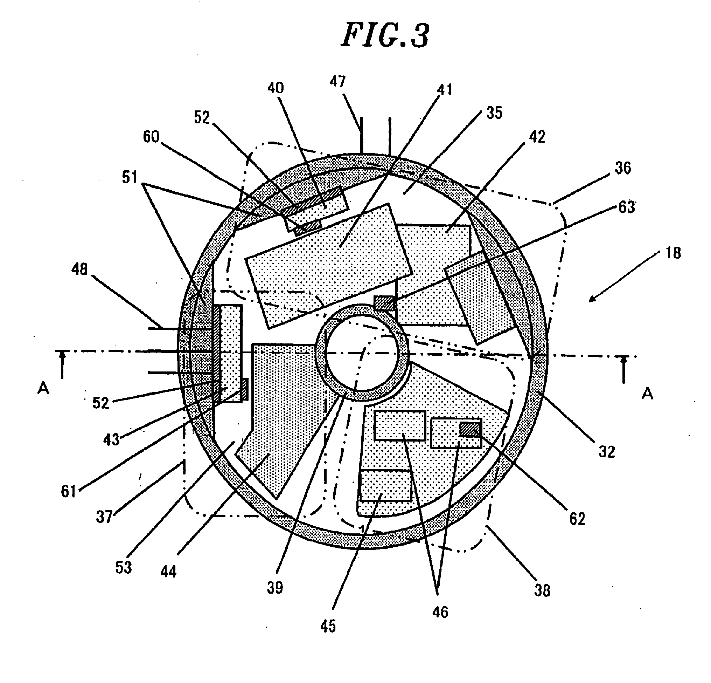

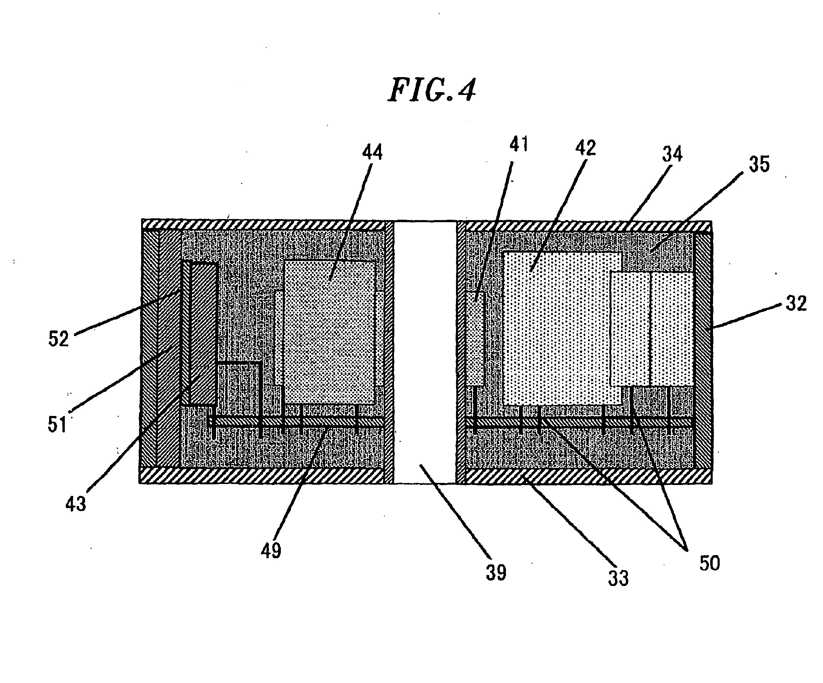

Fig. 3 provides a plan view to illustrate an exemplary internal configuration of compressor control unit 18 in accordance with the preferred embodiment, and Fig. 4 is a cross sectional view taken along a line A-A in Fig. 3.

As shown in Figs. 3 and 4, compressor control unit 18 includes driving circuit components for driving and controlling the compressor 16, wherein the driving circuit components are accommodated in housing 35 of a cylindrical sealed vessel structure including side plate portion 32, bottom plate portion 33 and ceiling plate portion 34. Specifically, the driving circuit components are accommodated in housing 35 by being largely divided into three blocks of rectifier circuit unit 36 serving as a converter for converting an AC power from a commercial AC power source into a DC power, switching circuit unit 37 serving as an inverter for converting the DC power into an AC power and control circuit unit 38. Further, formed in a central portion of compressor control unit 18 is discharge pipe accommodating portion 39 through which coolant discharge pipe 24 is to be inserted from compressor main body 17.

Rectifier circuit unit 36 has diode 40, capacitor 41, reactor 42, and so forth. Switching circuit unit 37 has IGBT device 43 which can be switched at a high speed, driving circuit 44 for driving IGBT device 43, and so on. Further, control circuit unit 38 has control circuit components such as control signal generator 45 and microcomputer 46.

Further, power supply unit 47 of the commercial AC power source is provided in side plate portion 32 of housing 35 at a position corresponding to where rectifier circuit unit 36 is located, and output terminal portion 48 connected to motor unit 23 of compressor 16 is provided in side plate portion 32 of housing 35 at a position corresponding to where switching circuit unit 37 is located.

Fig. 4 is a cross sectional view taken along a line A-A of Fig. 3. As shown in the figure, the sealed vessel includes cylindrical side plate portion 32, bottom plate portion 33 and ceiling plate portion 34. Formed in a central portion of the sealed vessel is discharge pipe accommodating portion 39 which is extended from bottom plate portion 33 to ceiling plate portion 34. Each of side plate portion 32, ceiling plate portion 34 and bottom plate portion 33 is formed of a material of a high thermal conductivity, e.g., a metal material, to have a hermetic water drip-proof structure. As shown in Fig. 4, the driving circuit components accommodated in housing 35 are mounted on substrate 49 serving as a circuit board which is horizontally installed on a bottom portion of housing 35. In Fig. 4, though the driving circuit components are shown to be connected to substrate 49 via connection terminals 50, it is also possible to directly surface-mount the driving circuit components on substrate 49, to thereby reduce the area and the volume occupied by the driving circuit components on substrate 49.

Referring back to Fig. 3, heating elements such as diode 40 of rectifier circuit unit 36 and IGBT device 43 of switching circuit unit 37 are disposed closer to side plate portion 32, and thermal conductors 51 formed of a material of a high thermal conductivity are interposed between side plate portion 32 and the heating elements. Thermal conductors 51 serve to emit heat from diode 40 and IGBT device 43 to the outside of housing 35, and each thermal conductor 51 has adhesive resin layer 52 to facilitate their adherence to the heating elements. Also, the material for thermal conductors 51 may be a metal material of a high thermal conductivity such as copper or aluminum, a resin material of a high thermal conductivity, or the like. In case thermal conductors 51 are formed of an elastic resin material, firm adhesion between the heating elements and thermal conductors 51 can be secured such that provision of adhesive resin layers 52 may not be needed.

As shown in Fig. 3, resin 53 is molded between the circuit components in housing 35 to insulate them from each other and at the same time to secure vibration resistance and moisture resistance. Here, since rectifier circuit unit 36 and switching circuit unit 37, both featuring high heat discharge rates, coexist with control circuit unit 38 having a low heat discharge rate, it is possible to use different resin materials to be molded between the circuit components in each block area, to thereby improve the reliability of the circuit components. That is, a resin material of a high thermal conductivity may be molded as a whole, while an insulating resin material of a low thermal conductivity may be molded at an interface between control circuit unit 38 and rectifier circuit unit 36 and/or between control circuit unit 38 and switching circuit unit 37. Moreover, instead of using the insulating resin material, it is also possible to provide an air insulation space. Accordingly, by selecting a proper resin material for each block and each circuit component, it is possible to fix the circuit components and at the same time control the heat discharge rates thereof. Thus, the compressor control unit can be made compact effectively.

Further, as shown in Fig. 3, temperature sensors 60, 61 and 62 are installed in rectifier circuit unit 36 serving as a converter, switching circuit unit 37 serving as an inverter and control circuit unit 38, respectively. Temperature sensor 60 provided in rectifier circuit unit 36 measures the temperature of diode 40 which emits heat most among elements of rectifier circuit unit 36. Here, the temperature of diode 40 may refer to the temperature of diode 40 itself or the temperature around it. Temperature sensor 61 installed in switching circuit unit 37 detects the temperature of IGBT device 43 which emits heat most among elements of switching circuit unit 37. Here, the temperature of IGBT device 43 may refer to the temperature of IGBT device 43 itself or the temperature around it. Also, temperature sensor 62 provided in control circuit unit 38 measures the temperature of microcomputer 46 incorporated therein which is vulnerable to heat. The temperature of microcomputer 46 may refer to the temperature of microcomputer 46 itself or the temperature around it. Here, the temperature around each circuit element to be measured refers to the temperature of ambient air around the element or the temperature of a resin material charged in that area.

In the preferred embodiment, also installed in housing 35 of compressor control unit 18 is temperature sensor 63 for measuring the temperature around discharge pipe accommodating portion 39 through which coolant discharge pipe 24 is to be inserted.

The temperature information obtained by these temperatures sensors 60 to 63 is transmitted to control circuit unit 38 of compressor control unit 18 and then is fed back to rectifier circuit unit 36 or switching circuit unit 37 to be used to control the operation of compressor main body 17. Also, the temperature information may be used to control the operation of blower motor 14, a cooling cycle switching valve (not shown), or the like, as well as to control compressor main body 17.

As described above, compressor control unit 18 in accordance with the preferred embodiment illustrated in Figs. 3 and 4 is configured to be able to release heat emitted from the heating elements efficiently. However, the temperature of each circuit component may be varied depending on any change in an operational condition or environmental condition, so it may happen that the temperature of a circuit component increases beyond a corresponding temperature threshold, rendering the circuit component inoperable. For the reason, in the preferred embodiment of the present invention, the temperature of microcomputer 46, which tends to be readily damaged by heat, is measured as well as detecting the temperatures of heating elements such as diode 40 and IGBT device 43 and the temperature of housing 35 in the vicinity of coolant discharge pipe 24, which tends to record a highest temperature outside compressor control unit 18. Thus obtained temperature information is processed in control circuit unit 38 to be used to control the operational status of compressor main body 17, to thereby restrain a temperature rise of each circuit component beyond its temperature threshold. In particular, in case of employing a compressor inverter control mechanism as in the preferred embodiment of the present invention, it is possible to control the temperatures of the circuit components to be in predetermined temperature ranges by way of controlling the operational frequencies thereof, respectively. In such a case, reliability of the circuit components including microcomputer 46 and the like can be improved, and a stable compressor operation can be secured.

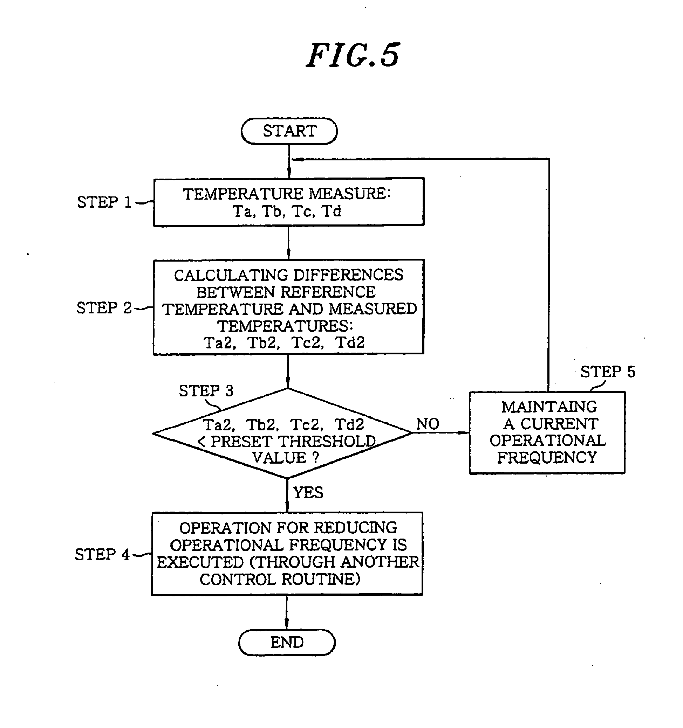

Fig. 5 sets forth a flow chart to describe a compressor control method in accordance with the preferred embodiment of the present invention. In the figure, Ta, Tb, Tc and Td represent temperatures measured by temperature sensors 60 to 63 provided at diode 40, IGBT device 43, microcomputer 46 and at the vicinity of discharge pipe accommodating portion 39, respectively. Further, reference temperatures are set for the circuit components respectively, wherein those for diode 40, IGBT device 43, microcomputer 46 and the vicinity of discharge pipe accommodating portion 39 are set to be Ta1, Tb1, Tc1 and Td1, respectively. In the preferred embodiment, differences between the reference temperatures Ta1, Tb1, Tc1 and Td1 and the temperatures Ta, Tb, Tc and Td measured by temperature sensors 60 to 63 are respectively calculated, and if all temperature differences fall below a preset threshold value, an operational frequency of inverter control is controlled.

That is, as shown in Fig. 5, a compressor operation is started, and temperatures Ta, Tb, Tc and Td are detected by temperature sensors 60 to 63, respectively (step 1). Then, differences Tal-Ta (=Ta2), Tb1-Tb (=Tb2), Tc1-Tc (=Tc2) and Td1-Td (=Td2) between the reference temperatures Ta1, Tb1, Tc1 and Td1 and the detected temperatures Ta, Tb, Tc and Td are calculated (step 2). Thereafter, it is determined whether the differences Ta2, Tb2, Tc2 and Td2 are smaller than the preset threshold value (step 3). If the determination result shows that all of the differences are smaller than the preset threshold value, the operation for reducing the operational frequency of the inverter control is allowed, and the reduction operation of the operational frequency is executed through another control routine (step 4). Meanwhile, if at least one of the differences is found to be not smaller than the preset threshold value, the operation of the compressor is continued while maintaining a current operational frequency (step 5), and the process returns to step 1.

As another example of utilizing the comparison result, it can be configured such that, if at least one of the differences is smaller than the preset threshold value at step 3, the process proceeds to step 4 and if all of the differences are greater than the preset threshold value at step 3, it goes to step 5.

Here, the reference temperatures and the threshold values may be set to be different from each other depending on the respective circuit components. Further, it is also possible to assign an order of priorities to the determination results or to make determination by operating the differences. Although the compressor control method has been described for a situation where the operational frequency is reduced through another control routine, a control for increasing the operational frequency can be performed by repeating the steps in the similar manner as described above. Further, in case of controlling the temperature around discharge pipe accommodating portion 39 in particular, the operation control for the blower of the air conditioner can be also performed along with the control of the compressor to keep the temperature around discharge pipe accommodating portion 39 below a certain temperature level.

In accordance with the compressor control method in accordance with the preferred embodiment as described above, it is possible to perform an optimal operation of the air conditioner and to improve the reliability of the circuit components accommodated in compressor control unit 18, while realizing size reduction thereof.

Moreover, though the comparison in accordance with the above-described control method has been described as being made based on temperatures detected by temperature sensors 60 to 63 at arbitrarily time, temporal variations of the temperatures detected by the temperature sensors can be used instead. For example, if the circuit components have different temperature rising gradients with respect to operation time, it is possible to estimate the time required for reaching a temperature of an upper limit of each circuit component based on the detected temperature gradients to thereby achieve a more stable operation of the air conditioner.

As described above, in accordance with the present invention, a compact inverter driving compressor control unit using an AC power source can be obtained without deteriorating reliability of components incorporated therein. By using such an inventive compressor control unit and compressor control method using it, it is possible to perform an optimal operation of an air conditioner. Thus, the present invention can be applied to an air conditioner, a refrigerator, a vending machine, and so forth.

## Claims

1. A compressor control unit (18) comprising:
a driving circuit unit including a converter circuit unit (36), an inverter circuit unit (37) and a control circuit unit (38) ; and
temperature detectors (60, 61, 62) installed in at least two of the circuit units;
**characterized in that**
the converter circuit unit (36), the inverter circuit unit (37) and the control circuit unit (38) are disposed in a sealed housing (35);
one (60) of the temperature detectors is provided in the converter circuit unit (36) for determining a temperature of at least one heating element in the converter circuit unit (36) ;
one (61) of the temperature detectors is provided in the inverter circuit unit (37) for determining a temperature of at least one heating element in the inverter circuit unit (37) ; and
one (62) of the temperature detectors is provided in the control circuit unit (38) for determining a temperature of at least one heating element in the control circuit unit (30).

2. The compressor control unit of claim 1, wherein
the at least one heating element in the converter circuit unit (36) is a diode (40);
the at least one heating element in the inverter circuit unit (37) is an IGBT device (43); and
the at least one heating element in the control circuit unit (38) is a microcomputer (46).

3. The compressor control unit of claim 1 or 2 for use in a compressor (16) having a compressor main body (17) with a coolant discharge pipe (24), comprising:
a temperature detector (63) for detecting temperature in vicinity of the coolant discharge pipe (24),
wherein the compressor control unit (18) is mounted on the compressor main body (17) by inserting the coolant discharge pipe (24) through the housing (35), and the temperature detector (63) is installed at a vicinity of the coolant discharge pipe (24) in the housing (35) .

4. The compressor control unit of claim 3, further comprising a discharge pipe accommodating portion (39) formed in the sealed housing (35), the discharge pipe accommodating portion (39) being adapted to insert the discharge pipe (24) therethrough.

5. The compressor control unit of claim 4, wherein the temperature detector (63) is installed in the sealed housing (35) for detecting temperature around the discharge pipe accommodating portion (39).

6. A compressor control method performed by employing a compressor control unit including a driving circuit unit having a converter circuit unit, an inverter circuit unit and a control circuit unit disposed in a sealed housing, comprising the steps of:
preparing a plurality of temperature detectors for detecting temperatures of the circuit units; and
controlling an operation of the compressor based on a temperature value detected at least one of the plurality of the temperature detectors;
**characterized by**
installing one of the plurality of temperature detectors in the converter circuit unit for determining a temperature of at least one heating element in the converter circuit unit;
installing one of the plurality of temperature detectors in the inverter circuit unit for determining a temperature of at least one heating element in the inverter circuit unit;
installing one of the plurality of temperature detectors in the control circuit unit for determining a temperature of at least one heating element in the control circuit unit; and
controlling an operation of the compressor based on temperature values detected the temperature detectors in the circuit units.

7. The method of claim 6, wherein the compressor control unit is for use in a compressor having a compressor main body with a coolant discharge pipe, further comprising the steps of:
mounting the compressor control unit on the compressor main body by inserting the coolant discharge pipe through the housing;
installing a temperature detector at a vicinity of the coolant discharge pipe in the housing for detecting temperature in vicinity of the coolant discharge pipe; and
controlling an operation of the compressor also based on a temperature value detected the temperature detector at a vicinity of the coolant discharge pipe.

8. The method of claim 6 or 7, wherein
the at least one heating element in the converter circuit unit is a diode;
the at least one heating element in the inverter circuit unit is an IGBT device; and
the at least one heating element in the control circuit unit is a microcomputer.

9. The method of one of the claims 6 to 8, wherein the operation of the compressor is controlled based on temporal variations of temperatures detected by the temperature detectors.

## Patentansprüche

1. Kompressorsteuereinheit (18) mit:
einer Ansteuerschaltkreiseinheit, die eine Wandlerschaltkreiseinheit (36), eine Inverterschaltkreiseinheit (32) und eine Steuerschaltkreiseinheit (38) aufweist; und Temperaturdetektoren (60, 61, 62), die in wenigstens zweien der Schaltkreiseinheiten installiert sind;
**dadurch gekennzeichnet, dass**
die Wandlerschaltkreiseinheit (36), die Inverterschaltkreiseinheit (37) und die Steuerschaltkreiseinheit (38) in einem abgedichteten Gehäuse angeordnet sind;
einer (60) der Temperaturdetektoren in der Wandlerschaltkreiseinheit vorgesehen ist, um eine Temperatur von wenigstens einem Wärmeelement in der Wandlerschaltkreiseinheit (36) zu ermitteln;
einer (61) der Temperaturdetektoren in der Inverterschaltkreiseinheit (37) vorgesehen ist, um eine Temperatur von wenigstens einem Wärmeelement in der Inverterschaltkreiseinheit (37) zu ermitteln; und
einer (62) der Temperaturdetektoren in der Steuerschaltkreiseinheit (38) vorgesehen ist, um eine Temperatur von wenigstens einem Wärmeelement in der Steuerschaltkreiseinheit (38) zu ermitteln.

2. Kompressorsteuereinheit nach Anspruch 1, wobei
das wenigstens eine Wärmeelement in der Wandlerschaltkreiseinheit (36) eine Diode (40) ist;
das wenigstens eine Wärmeelement in der Inverterschaltkreiseinheit (37) eine IGBT-Vorrichtung (43) ist; und
das wenigstens eine Wärmeelement in der Steuerschaltkreiseinheit (38) ein Mikrocomputer (46) ist.

3. Kompressorsteuereinheit nach Anspruch 1 oder 2 zur Verwendung in einem Kompressor (16), der einen Kompressorhauptkörper (17) mit einem Kühlmittelauslassrohr (24) aufweist, umfassend:
einen Temperaturdetektor (63) zum Detektieren einer Temperatur in einer Umgebung des Kühlmittelauslassrohres (24),
wobei die Kompressorsteuereinheit (18) an dem Kompressorhauptkörper (17) befestigt wird, indem das Kühlmittelauslassrohr (24) durch das Gehäuse (35) eingefügt wird, und der Temperaturdetektor (63) in einer Umgebung des Kühlmittelauslassrohres (24) in dem Gehäuse (35) installiert wird.

4. Kompressorsteuereinheit nach Anspruch 3, ferner mit einem Auslassrohraufnahmeteil (39), der in dem abgedichteten Gehäuse (35) ausgebildet ist, wobei der Auslassrohraufnahmeteil (39) ausgelegt ist, um durch diesen hindurch das Auslassrohr (24) einzufügen.

5. Kompressorsteuereinheit nach Anspruch 4, wobei der Temperaturdetektor (63) in dem abgedichteten Gehäuse (35) installiert ist, um eine Temperatur um den Auslassrohraufnahmeteil (39) herum zu detektieren.

6. Kompressorsteuerverfahren, das durchgeführt wird, indem eine Kompressorsteuereinheit verwendet wird, die eine Ansteuerschaltkreiseinheit mit einer Wandlerschaltkreiseinheit, einer Inverterschaltkreiseinheit und einer Steuerschaltkreiseinheit, die in einem abgedichteten Gehäuse angeordnet sind, aufweist, die Schritte umfassend:
Vorbereiten einer Mehrzahl von Temperaturdetektoren zum Detektieren von Temperaturen der Schaltkreiseinheiten; und
Steuern eines Betriebs des Kompressors auf der Grundlage eines von wenigstens einem der Mehrzahl der Temperaturdetektoren detektierten Temperaturwert;
**gekennzeichnet durch**
Installieren von einem der Mehrzahl von Temperaturdetektoren in der Wandlerschaltkreiseinheit, um eine Temperatur von wenigstens einem Wärmeelement in der Wandlerschaltkreiseinheit zu ermitteln;
Installieren von einem der Mehrzahl von Temperaturdetektoren in der Inverterschaltkreiseinheit, um eine Temperatur von wenigstens einem Wärmeelement in der Inverterschaltkreiseinheit zu ermitteln;
Installieren von einem der Mehrzahl von Temperaturdetektoren in der Steuerschaltkreiseinheit, um eine Temperatur von wenigstens einem Wärmeelement in der Steuerschaltkreiseinheit zu ermitteln; und
Steuern eines Betriebs des Kompressors auf der Grundlage von von den Temperaturdetektoren in den Schaltkreiseinheiten detektierten Temperaturwerten.

7. Verfahren nach Anspruch 6, wobei die Kompressorsteuereinheit zur Verwendung bei einem Kompressor vorgesehen ist, der einen Kompressorhauptkörper mit einem Kühlmittelauslassrohr aufweist, ferner die Schritte umfassend:
Befestigen der Kompressorsteuereinheit an dem Kompressorhauptkörper, indem das Kühlmittelauslassrohr durch das Gehäuse hindurch eingefügt wird;
Installieren eines Temperaturdetektors in einer Umgebung des Kühlmittelauslassrohres in dem Gehäuse, um eine Temperatur in der Umgebung des Kühlmittelauslassrohres zu detektieren; und
Steuern eines Betriebs des Kompressors auch auf der Grundlage eines von dem Temperaturdetektor in einer Umgebung des Kühlmittelauslassrohres detektierten Temperaturwerts.

8. Verfahren nach Anspruch 6 oder 7, wobei
das wenigstens eine Wärmeelement in der Wandlerschaltkreiseinheit eine Diode ist; das wenigstens eine Wärmeelement in der Inverterschaltkreiseinheit eine IGBT-Vorrichtung ist;
das wenigstens eine Wärmeelement in der Steuerschaltkreiseinheit ein Mikrocomputer ist.

9. Verfahren nach einem der Ansprüche 6 bis 8, wobei der Betrieb des Kompressors auf der Grundlage zeitlichen Variationen von von den Temperaturdetektoren detektierten Temperaturen gesteuert wird.

## Revendications

1. Unité de commande de compresseur (18) comprenant :
une unité de circuit d'entraînement comprenant une unité de circuit de conversion (36), une unité de circuit d'inversion (37) et une unité de circuit de commande (38) ; et
des détecteurs de température (60, 61, 62) installés dans au moins deux des unités de circuit ;
**caractérisée en ce que**
l'unité de circuit de conversion (36), l'unité de circuit d'inversion (37) et l'unité de circuit de commande (38) sont disposées dans un boîtier étanche
l'un (60) des détecteurs de température est disposé dans l'unité de circuit de conversion (36) pour déterminer une température d'au moins un élément chauffant dans l'unité de circuit de conversion (36) ;
l'un (61) des détecteurs de température est disposé dans l'unité de circuit d'inversion (37) pour déterminer une température d'au moins un élément chauffant dans l'unité de circuit d'inversion (37) ; et
l'un (62) des détecteurs de température est disposé dans l'unité de circuit de commande (38) pour déterminer une température d'au moins un élément chauffant dans l'unité de circuit de commande (30).

2. Unité de commande de compresseur selon la revendication 1, dans laquelle
l'au moins un élément chauffant dans l'unité de circuit de conversion (36) est une diode (40) ;
le au moins un élément chauffant dans l'unité de circuit d'inversion (37) est un dispositif IGBT (43) ; et
le au moins un élément chauffant dans l'unité de circuit de commande (38) est un micro-ordinateur (46).

3. Unité de commande de compresseur selon la revendication 1 ou 2 à utiliser dans un compresseur (16) possédant un corps principal de compresseur (17) avec un tuyau de décharge de fluide caloporteur (24), comprenant :
un détecteur de température (63) destiné à détecter la température à proximité du tuyau de décharge de fluide caloporteur (24),
dans laquelle l'unité de commande de compresseur (18) est montée sur le corps principal de compresseur (17) en insérant le tuyau de décharge de fluide caloporteur (24) à travers le boîtier (35), et le détecteur de température (63) est installé à proximité du tuyau de décharge de fluide caloporteur (24) dans le boîtier (35).

4. Unité de commande de compresseur selon la revendication 3, comprenant en outre une partie de logement de tuyau de décharge (39) formée dans le boîtier étanche (35), la partie de logement de tuyau de décharge (39) étant adaptée pour insérer le tuyau de décharge (24) à travers celle-ci.

5. Unité de commande de compresseur selon la revendication 4, dans laquelle le détecteur de température (63) est installé dans le boîtier étanche (35) pour détecter la température autour de la partie de logement de tuyau de décharge (39).

6. Procédé de commande de compresseur effectué en employant une unité de commande de compresseur comprenant une unité de circuit d'entraînement ayant une unité de circuit de conversion, une unité de circuit d'inversion et une unité de circuit de commande disposées dans un boîtier étanche, comprenant les étapes consistant à :
préparer une pluralité de détecteurs de température destinés à détecter des températures des unités de circuit ; et
commander une action du compresseur sur la base d'une valeur de température détectée par au moins un détecteur de la pluralité des détecteurs de température ;
**caractérisé par**
l'installation d'un détecteur de la pluralité de détecteurs de température dans l'unité de circuit de conversion pour déterminer une température d'au moins un élément chauffant dans l'unité de circuit de conversion ;
l'installation d'un détecteur de la pluralité de détecteurs de température dans l'unité de circuit d'inversion pour déterminer une température d'au moins un élément chauffant dans l'unité de circuit d'inversion ;
l'installation d'un détecteur de la pluralité de détecteurs de température dans l'unité de circuit de commande pour déterminer une température d'au moins un élément chauffant dans l'unité de circuit de commande; et
la commande d'une action du compresseur sur la base de valeurs de température détectées par les détecteurs de température dans les unités de circuit.

7. Procédé selon la revendication 6, dans lequel l'unité de commande de compresseur est à utiliser dans un compresseur possédant un corps principal de compresseur avec un tuyau de décharge de fluide caloporteur, comprenant les étapes consistant à :
monter l'unité de commande de compresseur sur le corps principal de compresseur en insérant le tuyau de décharge de fluide caloporteur à travers le boîtier ;
installer un détecteur de température à proximité du tuyau de décharge de fluide caloporteur dans le boîtier pour détecter la température à proximité du tuyau de décharge de fluide caloporteur ; et
commander une action du compresseur également sur la base d'une valeur de température détectée par le détecteur de température à proximité du tuyau de décharge de fluide caloporteur.

8. Procédé selon la revendication 6 ou 7, dans lequel
l'au moins un élément chauffant dans l'unité de circuit de conversion est une diode ;
l'au moins un élément chauffant dans l'unité de circuit d'inversion est un dispositif IGBT ; et
l'au moins un élément chauffant dans l'unité de circuit de commande est un micro-ordinateur.

9. Procédé selon l'une des revendications 6 à 8,
dans lequel le fonctionnement du compresseur est commandé sur la base de variations temporelles de températures détectées par les détecteurs de température.
